# EUROPEAN PATENT SPECIFICATION

(11) **EP 4 342 658 B1**
(45) Date of publication and mention of the grant of the patent: **25.03.2026**
(21) Application number: 23787693.3
(22) Date of filing: 11.04.2023
(51) Int. Cl.: B29C 64/118, B29C 64/295, B29C 64/314, B33Y 10/00, B33Y 30/00, B29C 35/16, B29C 64/218

(54) **3D PRINTING SYSTEM AND CONTROL METHOD**
3D-DRUCKSYSTEM UND STEUERUNGSVERFAHREN
SYSTÈME D'IMPRESSION 3D ET PROCÉDÉ DE COMMANDE

(30) Priority: 13.04.2022 CN 202210384843; 13.04.2022 CN 202220850847 U
(43) Date of publication of application: 27.03.2024
(73) Proprietor: Suzhou Meaman Machines Co., Ltd., Suzhou, Jiangsu 215400 (CN)
(72) Inventor: HUANG, Weidong, Suzhou, Jiangsu 215400 (CN)
(74) Representative: Murgitroyd & Company
(86) International application number: PCT/CN2023/087594
(87) International publication number: WO 2023/198049

(56) References cited:
- WO-A2-2020/014397
- CN-A- 107 599 379
- CN-A- 108 527 839
- CN-A- 109 605 745
- CN-A- 111 421 809
- CN-A- 113 400 647
- CN-U- 217 414 911
- US-A1- 2016 221 261
- US-A1- 2019 210 286
- US-A1- 2021 402 687

## Description

### TECHNICAL FIELD

The present application relates to the field of 3D printing, and in particular, to a 3D printing system and a control method.

### BACKGROUND

In a 3D printing technology based on material extrusion, such as a fused deposition molding (fused deposition molding, FDM) technology, layer-by-layer printing is implemented on a forming platform for a molten material based on relative motion between a material extrusion apparatus and the forming platform, finally forming a 3D printed object.

A fusion effect between a current layer and a previous layer of the current layer printed by the material extrusion apparatus directly affects performance and precision of the 3D printed object. Therefore, how to ensure better fusion between the current printing layer and the previous layer is an important research direction in 3D printing technology.
According to US2021/0402687A1, a three-dimensional shaping device includes: a plasticizing unit configured to plasticize a material to generate a plasticized material; a stage having a deposition surface on which the plasticized material is deposited; an ejection unit that has a plurality of nozzles arranged side by side along a first axis parallel to the deposition surface of the stage, and that is configured to eject the plasticized material in a continuous linear form from the plurality of nozzles toward the deposition surface; an ejection switching unit configured to individually switch between stopping and resuming ejection of the plasticized material from the plurality of nozzles; a moving unit configured to move the ejection unit with respect to the stage along a second axis that is parallel to the deposition surface of the stage and that intersects the first axis; and a control unit configured to laminate a shaping layer formed of the plasticized material on the deposited surface of the stage by controlling the plasticizing unit, the ejection switching unit, and the moving unit.

### SUMMARY

The present application provides a 3D printing system, which can implement better fusion between a current printing layer and a previous layer of the current printing layer, and improve performance and precision of a 3D printed object.

Technical solutions of embodiments of the present application are set out in the appended set of claims.

A preheating apparatus is disposed, and a previous layer of a current layer can be preheated before the current layer is printed by a material extrusion apparatus, so that a temperature of the previous layer reaches a temperature that is more suitable for fusion with the current layer, thereby improving performance and precision of a printed object.

### BRIEF DESCRIPTION OF THE DRAWINGS

FIG. 1 is a schematic structural diagram of a 3D printing system in a related technology.
FIG. 2 is a schematic structural diagram of a 3D printing system according to an embodiment of the present application.
FIG. 3 is a schematic structural diagram of another 3D printing system according to an embodiment of the present application.
FIG. 4 is a side view of the 3D printing system 300 in FIG. 3.
FIG. 5(a) is a schematic structural diagram of a roller apparatus according to an embodiment of the present application.
FIG. 5(b) is a schematic structural diagram of a roller apparatus according to an embodiment of the present application.
FIG. 6 is a schematic flowchart of a control method according to an embodiment of the present application.
FIG. 7 is a schematic flowchart of another control method according to an embodiment of the present application.

### DETAILED DESCRIPTION OF THE EMBODIMENTS

The following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

Embodiments of the present application provide a 3D printing system and a control method, which can improve performance and precision of a 3D printed object.

The following describes the technical solutions of the present application in detail with reference to the accompanying drawings and specific embodiments.

To describe the 3D printing system provided in this embodiment of the present application more clearly, a structure of the 3D printing system in a related technology is first described.

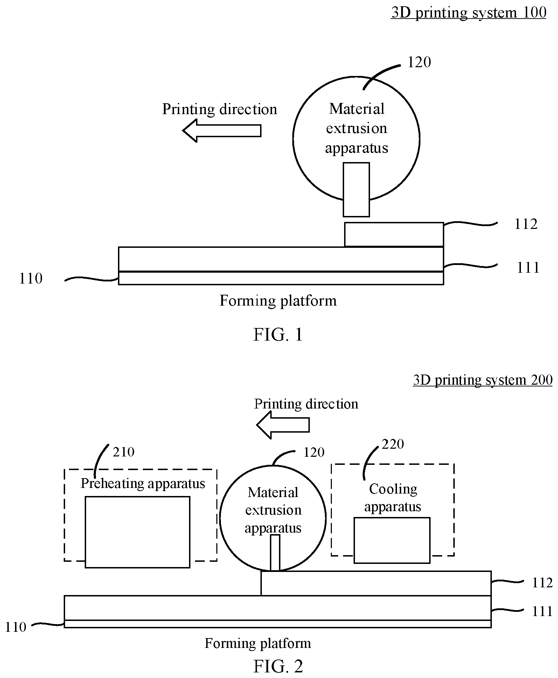

Referring to FIG. 1, FIG. 1 is a schematic structural diagram of a 3D printing system 100 in the related technology. The 3D printing system 100 generally includes a forming platform 110 and a material extrusion apparatus 120.

In some scenarios, the material extrusion apparatus 120 may also be referred to as a printing head, and is configured to: extrude a molten material onto the forming platform 110, and implement layer-by-layer printing on the forming platform 110 based on a relative motion with the forming platform 110, to finally form a 3D printed object.

As shown in FIG. 1, when the material extrusion apparatus 120 moves in a printing direction indicated by using an arrow in FIG. 1, a newly extruded material forms a current printing layer 112 on the forming platform 110. The current printing layer 112 needs to be fused with a previous printing layer 111 of the current printing layer 112. In an actual printing process, if a fusion effect between the current printing layer 112 and the previous printing layer 111 is not good, final forming performance and precision of the 3D printed object are directly affected. For example, a temperature of the previous printing layer 111 decreases after printing is completed, but a temperature of a newly extruded molten material is generally high, which causes a relatively large temperature difference between the two layers that need to be fused and affects a fusion effect, thereby affecting performance and precision of the printed object.

Therefore, how to improve performance and precision of a 3D printed object by implementing better fusion between a current printing layer and a previous layer becomes an urgent problem to be solved.

In view of this, in the 3D printing system provided in the present application, a preheating apparatus is added to perform rapid preheating on a surface of a previous layer of a current layer before the current layer is printed, and the previous layer is heated to a temperature that may be better fused with a newly extruded molten material, thereby improving performance and precision of a 3D printed object.

The following describes the 3D printing system provided in the embodiment of the present application with reference to FIG. 2.

Referring to FIG. 2, FIG. 2 is a schematic structural diagram of a 3D printing system according to an embodiment of the present application. A 3D printing system 200 includes a forming platform 110, a material extrusion apparatus 120, and a preheating apparatus 210.

The preheating apparatus 210 is configured to preheat a previous layer 111 of a current layer before the material extrusion apparatus 120 prints the current layer 112.

Optionally, that the preheating apparatus 210 preheats the previous layer includes heating the previous layer from a current temperature to a first temperature more suitable for fusing with the current layer. The first temperature may be greater than a temperature of a forming chamber in which the 3D printing system is located, but is less than a temperature of a molten material in the material extrusion apparatus. Assuming that a temperature at which a material is converted from a solid state to a molten state is a second temperature, the first temperature may be set to be greater than the temperature of the forming chamber in which the 3D printing system is located, but less than the second temperature, so as to avoid damage to a formed shape of the previous layer In an example, the previous layer may be heated to an optimal bonding temperature of the previous layer and the current layer. The optimal bonding temperature is related to a property of a material, and may be specifically obtained by means of an experiment or experience.

In an implementation, the preheating apparatus 210 may preheat a region where printing is to be performed. For example, the preheating apparatus 210 may preheat a region in front of an extrusion port of the material extrusion apparatus 120.

In some embodiments, the preheating apparatus 210 may be disposed (or fastened) on a side of the material extrusion apparatus 120. In some other embodiments, the preheating apparatus 210 may alternatively be disposed separately from the material extrusion apparatus 120, and when the preheating apparatus 210 is required, the preheating apparatus 210 is moved to the front of the material extrusion apparatus 120 in a printing direction.

Optionally, there may be one or more preheating apparatuses 120. In an implementation, the preheating apparatus 210 may be disposed on only one side of the material extrusion apparatus 120. In another implementation, there may be two preheating apparatuses 210, and the two preheating apparatuses may be respectively disposed on two sides of the material extrusion apparatus 120. For example, the two preheating apparatuses may be respectively disposed on a side of a moving direction (namely, the front of the moving direction) and an opposite side of the moving direction (namely, the back of the moving direction) of the material extrusion apparatus 120. When the material extrusion apparatus moves, the preheating apparatus disposed on the side of the moving direction is in an operating state, preheats a surface of the previous layer of the current printing layer, and rapidly heats a temperature of the surface of the previous layer to the foregoing first temperature, so that a molten material extruded by the material extrusion apparatus can be fused well with the previous layer. The preheating apparatus disposed on the opposite side of the moving direction may be in a non-operating state.

In this way, the two preheating apparatuses may switch between operating states as a moving direction of the material extrusion apparatus changes, so as to ensure that a printing effect of the current printing layer is not affected while preheating processing is performed on the previous layer of the current printing layer.

Optionally, the preheating apparatus in the operating state may be disposed close to the current printing layer, and the preheating apparatus in the non-operating state may be disposed away from the current printing layer.

Specifically, the preheating apparatus in the operating state may be lowered to a preset height, so that rapid preheating processing may be implemented on the previous layer of the current printing layer. In an example, a specific height difference (a height difference is δ, for example, δ = 0.1 mm) may be maintained between a bottom surface of the preheating apparatus in the operating state and a bottom surface of the material extrusion apparatus. For example, the bottom surface of the preheating apparatus in the operating state may be set slightly higher than the bottom surface of the material extrusion apparatus by δ. In this case, a distance between the preheating apparatus in the operating state and a surface of the previous printing layer is a sum of a printing thickness and a height difference (δ). In this way, interference between the preheating apparatus in the operating state and a non-connected region of a newly printed printing layer may be prevented, so as to avoid affecting a printing effect and printing precision. In addition, it can be further ensured that the preheating apparatus can rapidly increase a temperature of a surface on which printing is to be performed to the first temperature suitable for fusing with a newly printed layer.

In addition, the preheating apparatus in the non-operating state may be raised to a preset height, such as 10 mm, so as to reduce convection and diffusion heat transfer intensity of the preheating apparatus on the newly printed layer, thereby reducing impact of the preheating apparatus on performance and precision of the newly printed layer.

Optionally, the preheating apparatus may perform heating in a contact heating manner. In an example, the preheating apparatus may perform heating in a manner of pre-embedding a heating wire. In the manner of pre-embedding a resistance wire, an entire cast aluminum block becomes a heating body, thereby forming a preheating apparatus. In another example, the preheating apparatus may alternatively perform heating in a manner of heating a medium. For example, a circulation channel is disposed in the preheating apparatus, and a heat circulation medium, such as circulating oil, is introduced into the circulation channel, so as to implement temperature control on the preheating apparatus.

Optionally, the preheating apparatus may alternatively perform heating in a non-contact heating manner. For example, an infrared heating apparatus may be disposed to heat the preheating apparatus in an infrared heating manner, so as to preheat the previous layer of the current printing layer. Certainly, the infrared non-contact heating apparatus may be directly disposed as a preheating apparatus, and the infrared heating apparatus is used to directly preheat the previous layer. The manner of preheating the previous layer by means of non-contact heating, for example, further includes microwave heating, laser heating, and the like. A heating manner of the preheating apparatus or a heating manner for the current layer is not limited in the present application.

Optionally, a maximum temperature of a surface of the preheating apparatus during operation may reach 350°C.

Optionally, a size of the preheating apparatus may be, for example, 32 mm (width) × 100 mm (length) × 50 mm (height), and a width direction of the preheating apparatus is parallel to a length direction of the material extrusion apparatus.

Optionally, front and back edges of the preheating apparatus may be rounded.

In some application scenarios, because a molten material newly extruded from the material extrusion apparatus is at a relatively high temperature, a flow phenomenon easily occurs. In this case, printing precision is reduced, for example, size precision of a contour edge of a print object is reduced or the like. Second, if a temperature of a current printing layer that has just been printed is too high, the material is in a softened state, and is easily deformed under its own weight, thereby affecting printing precision. Third, the printing layer that has just been printed is still in a relatively high temperature, and has to be cooled to a proper temperature before a new printing layer is constructed thereon. Since natural cooling does not allow the new printing layer to be quickly printed, a member of the new printing layer cannot be printed until the printing layer that has just been printed is cooled to an appropriate temperature, thereby greatly affecting efficiency of printing the member.

In view of this, the 3D printing system provided in this embodiment of the present application may further include a cooling apparatus. Referring to FIG. 2, a cooling apparatus 220 is configured to: after the material extrusion apparatus 120 completes printing of a current layer, perform temperature control on the current layer, for example, perform cooling processing on the current layer. For example, the cooling apparatus 220 may lower a temperature of the current printing layer to a temperature at which the current printing layer is not prone to deformation.

In an actual printing process, the temperature of the current printing layer cannot fall too low. If the temperature is too low, a large internal stress is likely to be generated, causing deformation of the printing layer. Therefore, the cooling apparatus can control the temperature of the current printing layer not to be too low, avoiding causing deformation of the printed object.

In some embodiments, the cooling apparatus 220 may be disposed (or fastened) on a side of the material extrusion apparatus 120. In some other embodiments, the cooling apparatus 220 may alternatively be disposed separately from the material extrusion apparatus 120, and when the cooling apparatus 220 is required, the cooling apparatus 220 is moved to the back of the material extrusion apparatus 120 in a printing direction.

Optionally, there may be one or more cooling apparatuses 220. In an implementation, the cooling apparatus 220 may be disposed on only one side of the material extrusion apparatus 120.

In another implementation, there may be two cooling apparatuses 220, and the two cooling apparatuses may be respectively disposed on two sides of the material extrusion apparatus. For example, the two cooling apparatuses may be respectively disposed on a side of a moving direction (namely, the front of the moving direction) and an opposite side of the moving direction (namely, the back of the moving direction) of the material extrusion apparatus 120. When the material extrusion apparatus moves, the cooling apparatus disposed on the opposite side of the moving direction (the rear side of the moving direction) is in an operating state, and performs cooling processing on the molten material newly extruded from the material extrusion apparatus 120. The cooling apparatus disposed on the moving direction (the front side of the moving direction) may be in a non-operating state.

In this way, the two cooling apparatuses may switch between operation states as a moving direction of the material extrusion apparatus changes, so as to ensure that cooling processing on a newly printed layer does not affect another layer.

The 3D printing system further includes a flattening apparatus.
The flattening apparatus is configured to flatten the current layer after printing of the current layer is completed, so that the current layer keeps flat, and forming precision is improved.

In some embodiments, the flattening apparatus may be disposed (or fastened) on a side of the material extrusion apparatus 120. In some other embodiments, the flattening apparatus may alternatively be disposed separately from the material extrusion apparatus 120, and when the flattening apparatus is required, the flattening apparatus is moved to the rear of a printing direction of the material extrusion apparatus 120.

Optionally, there may be one or more flattening apparatuses.

In an embodiment, the flattening apparatus may include a cooling apparatus. After the material extrusion apparatus completes printing of the current layer, the flattening apparatus may implement flattening processing and cooling processing on the current layer, thereby effectively saving space in the 3D printing system and reducing design and manufacturing costs.

The flattening apparatus further includes a roller apparatus. In an example, the roller apparatus implements flatting processing on the current layer by directly contacting the current printing layer. In addition, the roller apparatus reduces a temperature of the current printing layer of the printed object by absorbing heat of a newly extruded material, so that the current printing layer is cooled rapidly to an appropriate temperature.

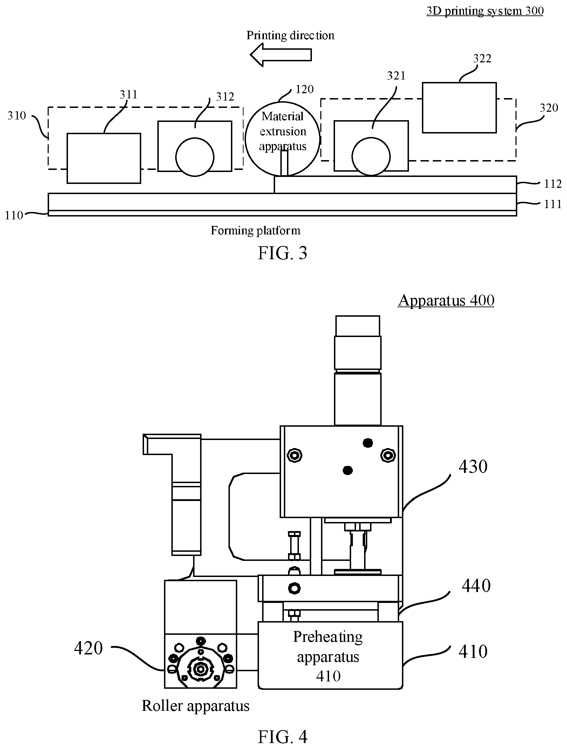

FIG. 3 is a schematic structural diagram of another 3D printing system according to an embodiment of the present application. A 3D printing system 300 in FIG. 3 includes a material extrusion apparatus 120, a first layer processing system 310, and a second layer processing system 320.

As shown in FIG. 3, the first layer processing system 310 is disposed on a side of the material extrusion apparatus 120, and moves following a motion of the material extrusion apparatus 120.

Optionally, the first layer processing system 310 includes a first preheating apparatus 311 and a first roller apparatus 312. The first preheating apparatus 311 is configured to preheat a previous layer of a current layer before the current layer is printed. The first preheating apparatus may be the preheating apparatus 210 in FIG. 2. The first roller apparatus 312 is located between the first preheating apparatus 311 and the material extrusion apparatus 120, and is configured to flatten the current layer after printing of the current layer is completed.

The second processing layer system 320 is disposed on another side of the material extrusion apparatus 120, and moves following a motion of the material extrusion apparatus 120. Optionally, the second layer processing system 320 includes a second preheating apparatus 322 and a second roller apparatus 321. The second preheating apparatus 322 is configured to preheat the previous layer of the current layer before the current layer is printed. The second preheating apparatus may be the preheating apparatus 210 in FIG. 2. The second roller apparatus 321 is located between the second preheating apparatus 322 and the material extrusion apparatus 120, and is configured to flatten the current layer after printing of the current layer is completed.

Optionally, the 3D printing system 300 further includes a control apparatus. The control apparatus may, for example, be connected to the first layer processing system 310 and the second layer processing system 320. When the material extrusion apparatus 120 moves towards a side on which the first layer processing system 310 is located (namely, the printing direction indicated by an arrow in FIG. 3), the control apparatus controls the first preheating apparatus 311 and the second roller apparatus 321 to be in an operating state, and controls the second preheating apparatus 322 and the first roller apparatus 312 to be in a non-operating state. Similarly, when the material extrusion apparatus 120 moves towards a side on which the second layer processing system 320 is located (namely, a direction opposite to the printing direction indicated by the arrow in FIG. 3), the control apparatus controls the second preheating apparatus 322 and the first roller apparatus 312 to be in an operating state, and controls the first preheating apparatus 311 and the second roller apparatus 321 to be in a non-operating state.

Optionally, a bottom surface of the roller apparatus in the operating state may be as high as a bottom surface of the material extrusion apparatus 120. Still referring to FIG. 3, when the material extrusion apparatus 120 moves in the direction indicated by the arrow, the roller apparatus 321 is in an operating state. When a bottom surface of the roller apparatus 321 may be as high as a bottom surface of the material extrusion apparatus 120, the roller apparatus 321 can better perform processing such as rolling, ironing, and temperature control on a newly printed layer.

Optionally, the roller apparatus may implement temperature control on the current printing layer in a contact manner. In an example, a temperature of a roller may be controlled in a manner of self-heating the roller. For example, a heating resistor wire is disposed in the roller, and the temperature of the roller is directly controlled by using the resistor wire. When the temperature of the roller is lower than a preset temperature, the roller may be directly heated by using the resistor wire. When the temperature of the roller is relatively high, heating is stopped, and the roller is cooled by means of heat radiation. For a roller self-heating solution, a manner of a circulation medium may be alternatively used, for example, a circulation flow channel is provided inside the roller, and a circulation medium is used to control a temperature of the roller. The circulation medium may be circulating oil, gas, or the like.

Optionally, the roller apparatus may alternatively implement temperature control by using a non-contact method, for example, an infrared heating manner. A temperature control manner of the roller apparatus is not limited in the present application.

In an implementation, a cooling apparatus is further provided on the first roller apparatus and/or the second roller apparatus, and is configured to cool the current layer after printing of the current layer is completed.

It should be noted that, the 3D printing system provided in the present application controls a temperature of a material on a surface of a printed object, for example, by using the preheating apparatus and roller apparatus mentioned above, but functions of the preheating apparatus and roller apparatus are different.

Specifically, the preheating apparatus preheats the previous layer of the current printing layer, and rapidly heats a local thin layer of the previous surface to a relatively high temperature that may be more suitable for fusing with a newly extruded material. Impact of the preheating apparatus on a temperature of the whole printed object may be negligible.

The roller apparatus performs rapid cooling processing on the current printing layer (or a printed new layer). Due to a newly extruded material has a high temperature, it is easy to flow freely, which affects size accuracy of an outline edge of the printed object. The roller apparatus has a preset temperature and a relatively large heat capacity relative to a material of a current printing layer, so that the newly extruded material can be rapidly reduced to a temperature that is not easy to flow, thereby facilitating implementation of precise accumulation. In addition, the roller apparatus may alternatively cooperate with another temperature control measure in a printing chamber, so that a printed object is maintained at a proper temperature that is not easily deformed. If a temperature of a component that has been printed is too high, the material is still in a softened state, and is easily deformed under its own weight. However, if the temperature is too low, a large internal stress is likely to be generated, causing deformation of the component. The roller apparatus absorbs heat of the newly extruded material by means of direct contact, thereby reducing heat accumulation of the printed object and avoiding excessive temperature rise of the printed object. In addition, the roller apparatus may also be provided with a heating apparatus, so as to avoid the temperature of the printed object being too low. In addition, the roller also has functions such as ironing for the current printing layer.

In an embodiment, the 3D printing system further includes a lifting mechanism, and the lifting mechanism may be connected to the first preheating apparatus 311 and the second preheating apparatus 322.

Optionally, when the material extrusion apparatus 120 moves towards a side on which the first layer processing system 310 is located, the lifting mechanism moves the first preheating apparatus 311 to a position closer to the previous printing layer than the second preheating apparatus 322. The first preheating apparatus 311 performs rapid preheating on the previous printing layer, and the second preheating apparatus 322 does not affect a surface of the newly printed layer.

Similarly, when the material extrusion apparatus 120 moves towards a side on which the second layer processing system 320 is located, the lifting mechanism moves the second preheating apparatus 322 to a position closer to the previous printing layer than the first preheating apparatus 311.

FIG. 4 is a side view of a preheating apparatus and a roller apparatus in the 3D printing system 300 in FIG. 3. An apparatus 400 in FIG. 4 may include a preheating apparatus 410, a roller apparatus 420, and a lifting mechanism 430. The preheating apparatus 410 may be the first preheating apparatus 311, or may be the second preheating apparatus 322 in FIG. 3. The roller apparatus 420 may be the first roller apparatus 311 or the second roller apparatus 321 corresponding to the preheating apparatus in FIG. 3.

Optionally, both sides of the material extrusion apparatus may each be provided with at least one apparatus 400.

When the preheating apparatus 410 is in an operating state, the lifting mechanism 430 drops the preheating apparatus 410 to a preset height, so that the preheating apparatus 410 can preheat a surface of a material on a previous layer better. Meanwhile, the lifting mechanism 430 moves the roller apparatus 420 in the non-operating state to a predetermined position, so that a bottom surface of the roller apparatus 420 is higher than a bottom surface of the preheating apparatus 410, and a proper height difference between the preheating apparatus 410 and the roller apparatus 420 is maintained, so as to prevent mutual interference between the preheating apparatus 410 and the roller apparatus 420.

Optionally, a separate lifting mechanism may be respectively disposed on the preheating apparatus 410 and the roller apparatus 420, which is not limited in the present application. As long as the lifting apparatus can adjust positions of the preheating apparatus 410 and the roller apparatus 420, so that the preheating apparatus 410 and the roller apparatus 420 do not interfere with each other in a working process.

Optionally, a top of the preheating apparatus 410 may be connected to the lifting mechanism 430 by using a heat insulation apparatus 440. The heat insulation apparatus 440 may be, for example, a heat insulation pad. The heat insulation apparatus 440 may avoid a heat radiation effect of heat of the preheating apparatus 410 on the lifting mechanism 430, and ensure stability of an upgraded mechanical structure.

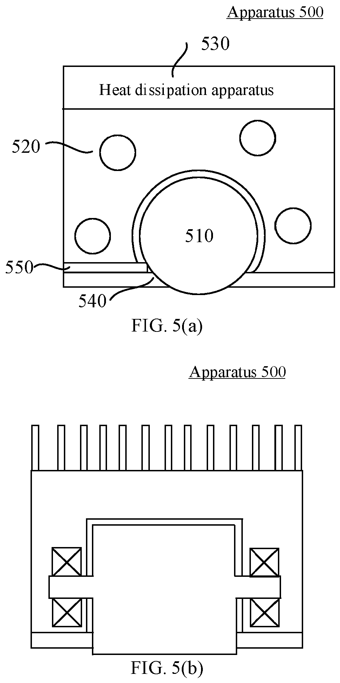

FIG. 5 is a structural diagram of a roller apparatus according to an embodiment of the present application. As shown in FIG. 5, the roller apparatus includes a roller 510, a heating apparatus 520, and a heat dissipation apparatus 530.

A roller apparatus 500 is configured to roll a layer that has just been printed and perform temperature control. By means of rolling, a newly printed layer may be kept flat, so as to better fuse with a layer to be printed, or a layer thickness of a printing layer may be better controlled, thereby ensuring forming precision. The roller apparatus 500 regulates a temperature of a material of a current printing layer, so that the temperature of the current printing layer rapidly cools to a preset temperature, improving printing efficiency.

The roller 510 is mounted in a metal bracket, and a material of the roller 510 may have a relatively large heat fusion and heat conductivity. In this way, the roller 510 may implement rapid temperature regulation by radiation of the metal bracket. In addition, after the roller 510 absorbs heat of the current printing layer when flattening the current printing layer, heat is transferred out, which does not cause a temperature of the roller 510 to be too high, and therefore does not cause damage to a material property of the current printing layer.

The heating apparatus 520 may be, for example, a heating rod or a heating block. The heating apparatus 520 is mounted on a mounting bracket of the roller 510, and is configured to perform temperature control on the metal bracket. When a temperature of the metal bracket reaches a specific temperature, a temperature of the roller 510 is controlled by means of thermal radiation.

The heat dissipation apparatus 530 may be, for example, a heat sink, such as a heat sink fin. The heat dissipation apparatus 530 is installed on a mounting bracket of the roller 510. When the temperature of the roller 510 is relatively high, the heat dissipation apparatus 530 may dissipate excess heat, so as to prevent the temperature of the metal bracket and the roller 510 from being excessively high to affect a current printing layer.

Optionally, the roller apparatus 500 may further include a material scraping plate 540, and the material scraping plate 540 may be disposed, for example, in a lower part of the metal bracket. A scraping end of the material scraping plate 540 is in contact with a surface of the roller 510, but does not affect its rotation. The material scraping plate 540 is configured to scrape a material on the surface of the roller 510, so as to prevent the material of the printing layer from adhering to the roller 510, thereby avoiding affecting a printing effect and printing precision of the printing layer.

In an implementation, the material of the material scraping plate 540 may include, for example, polytetrafluoroethylene. In another implementation, a specific height difference, for example, 1 mm, may be maintained between a bottom surface of the material scraping plate 540 and the lowest surface of the roller, so as to minimize impact of the material scraping plate 540 on a newly printed layer.

Optionally, the roller apparatus 500 further includes a brush 550, and a brush end of the brush 550 is in contact with a surface of the roller 510, but does not affect its rotation. The other end of the brush 550 is connected to a release agent, and is configured to gently brush the release agent slowly onto the surface of the roller 510, so that the surface of the roller 510 may be kept in a non-wetting state with a printed material, so as to prevent adhesion to the material. The brush 550 may be, for example, a soft brush.

In some application scenarios, the surface of the roller 510 may be knurled. First, a surface area of the roller 510 may be increased; second, by means of micro- concave and convex processing, an adhesive force between printed material layers may be increased; and third, by means of micro- concave and convex rolling, anisotropy of a material may be further improved, and performance of a printed component may be improved.

Optionally, a material of the roller 510 and a printing material may not be wetted with each other. In this way, damage to a printing layer caused by adhesion of the materials may be prevented.

Optionally, the 3D printing system may further include a temperature control apparatus. For example, the temperature control apparatus and a material extrusion apparatus may be fixed in a same frame, for example, a rigid frame, to perform accurate temperature control on a relative position of each apparatus, where heat insulation needs to be required between the apparatuses.

It should be noted that, the 3D printing system in the present application may refer to a complete system that can implement a 3D printing function, or may refer to a component or an assembly in a complete system. In some embodiments, the preheating apparatus and the cooling apparatus (or the flattening apparatus) mentioned above may be integrated on both sides of a 3D printing head (material extrusion apparatus), and move following a motion of the 3D printing head. In this case, the 3D printing system mentioned in this embodiment of the present application may be understood as a 3D printing head assembly or a 3D printing head system.

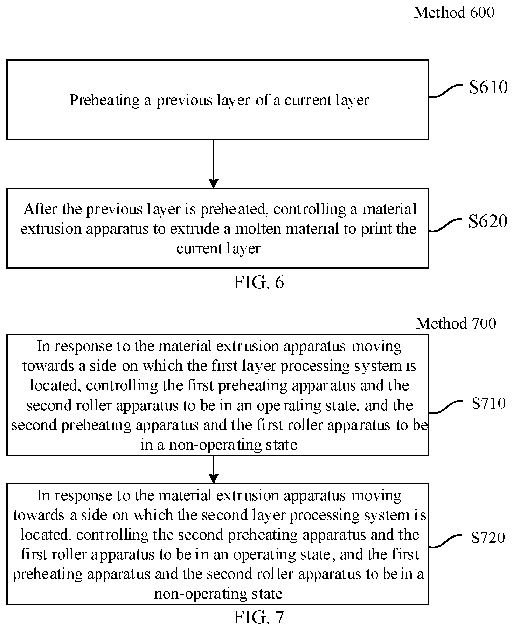

FIG. 6 is a schematic flowchart of a method for controlling a 3D printing system according to an embodiment of the present application. For example, a method 600 shown in FIG. 6 may be, for example, executed by the 3D printing system 200 shown in FIG. 2. The method 600 includes Step S610 and Step S620.

In Step S610, a previous layer of a current layer is preheated.

In Step S620, after the previous layer is preheated, a material extrusion apparatus is controlled to extrude a molten material to print the current layer.

In some embodiments, the current layer is cooled after the current layer is printed.

In some embodiments, the current layer is flattened after the current layer is printed, so that the current layer keeps flat.

FIG. 7 is a schematic flowchart of another method for controlling a 3D printing system according to an embodiment of the present application. A method 700 shown in FIG. 7 may be executed, for example, by using the 3D printing system 300 shown in FIG. 3. The 3D printing system includes:
a material extrusion apparatus, configured to extrude a molten material to print a current layer;
a first layer processing system, disposed on a side of the material extrusion apparatus and moving following a motion of the material extrusion apparatus; and
a second layer processing system, disposed on another side of the material extrusion apparatus and moving following a motion of the material extrusion apparatus.

The first layer processing system includes:
a first preheating apparatus, configured to preheat a previous layer of a current layer before the current layer is printed; and
a first roller apparatus, located between the first preheating apparatus and the material extrusion apparatus and configured to flatten the current layer after printing of the current layer is completed.

The second layer processing system includes:
a second preheating apparatus, configured to preheat the previous layer of the current layer before the current layer is printed; and
a second roller apparatus, located between the second preheating apparatus and the material extrusion apparatus and configured to flatten the current layer after printing of the current layer is completed.

The method 700 includes Step S710 and Step S720, which are specifically as follows.

In Step S710, in response to the material extrusion apparatus moving towards a side on which the first layer processing system is located, the first preheating apparatus and the second roller apparatus are controlled to be in an operating state, and the second preheating apparatus and the first roller apparatus are controlled to be in a non-operating state.

In Step S720, in response to the material extrusion apparatus moving towards a side on which the second layer processing system is located, the second preheating apparatus and the first roller apparatus are controlled to be in an operating state, and the first preheating apparatus and the second roller apparatus are controlled to be in a non-operating state.

All or some of the foregoing embodiments may be implemented by means of software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the processes or functions described according to the embodiments of the present invention are completely or partly generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any available medium accessible by a computer or a data storage device such as a server or a data center that includes one or more available media integrations. The usable medium may be a magnetic medium (for example, a floppy disk, a hard disk, or a magnetic tape), an optical medium (for example, a digital video disc (digital video disc, DVD)), a semiconductor medium (for example a solid-state drive (solid state disk, SSD)), or the like.

Persons of ordinary skill in the art may be aware that, units and algorithm steps in examples described in combination with the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of the present application.

In several embodiments provided in the present application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatus or units may be implemented in electronic, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, function units in the embodiments of the present application may be integrated into one processing unit, or each of the units may exist alone physically, or two or more units may be integrated into one unit.

The protection scope of the present application shall be subject to the protection scope of the claims.

## Claims

1. A 3D printing system, comprising:
a material extrusion apparatus (120), configured to extrude a molten material to print a current layer (112);
a preheating apparatus (210), configured to preheat a previous layer (111) of the current layer (112) before the current layer (112) is printed; and
a flattening apparatus, configured to: after printing of the current layer (112) is completed, flatten the current layer (112), so that the current layer (112) keeps flat;
the flattening apparatus comprises a roller apparatus (420, 500), the roller apparatus (420, 500) comprises a roller (510); **characterised in that** the roller apparatus further comprises a heating apparatus (520) and a heat dissipation apparatus (530), wherein the roller (510) is mounted in a metal bracket, and the heating apparatus (520) and the heat dissipation apparatus (530) are mounted on a mounting bracket of the roller (510), and wherein the heating apparatus (520) is configured to perform temperature control on the metal bracket, and wherein the heat dissipation apparatus (530) is configured to prevent a temperature of the metal bracket and the roller (510) from being excessively high to affect the current layer (112).

2. The 3D printing system according to claim 1, further comprising:
a cooling apparatus (220), configured to cool the current layer (112) after printing of the current layer (112) is completed.

3. The 3D printing system according to claim 1, wherein the flattening apparatus comprises a cooling apparatus (220), and the cooling apparatus (220) is configured to cool the current layer (112) after printing of the current layer (112) is completed.

4. The 3D printing system according to claim 1, wherein the roller apparatus (420, 500) further comprises:
a material scraping plate (540), wherein a scraping end of the material scraping plate (540) is in contact with a roller surface of the roller apparatus (420, 500), so as to scrape off a material on the roller surface.

5. The 3D printing system according to claim 4, wherein the roller apparatus (420, 500) further comprises:
a brush (550), wherein a brush end of the brush (550) is in contact with the roller surface of the roller apparatus (420, 500), so as to apply a release agent on the roller surface.

6. The 3D printing system according to claim 1, wherein a surface of the roller (510) is knurled.

7. A control method for the 3D printing system according to claim 1, comprising:
preheating (S610) a previous layer of a current layer (112) ; and
after the previous layer is preheated, controlling (S620)a material extrusion apparatus to extrude a molten material to print the current layer (112) ,
wherein after printing of the current layer (112) is completed, the current layer (112) is flattened, so that the current layer (112) keeps flat.

8. The control method according to claim 7, further comprising:
cooling the current layer (112) after printing of the current layer (112) is completed.

## Patentansprüche

1. Ein 3D-Drucksystem, das Folgendes beinhaltet:
eine Materialextrusionsvorrichtung (120), die konfiguriert ist, um ein geschmolzenes Material zu extrudieren, um eine aktuelle Schicht (112) zu drucken;
eine Vorwärmvorrichtung (210), die konfiguriert ist, um eine vorherige Schicht (111) der aktuellen Schicht (112) vorzuwärmen, bevor die aktuelle Schicht (112) gedruckt wird;
und
eine Abflachungsvorrichtung, die konfiguriert ist, um: nachdem das Drucken der aktuellen Schicht (112) abgeschlossen ist, die aktuelle Schicht (112) abzuflachen, sodass die aktuelle Schicht (112) flach bleibt;
die Abflachungsvorrichtung eine Walzenvorrichtung (420, 500) beinhaltet, die Walzenvorrichtung (420, 500) eine Walze (510) beinhaltet; **dadurch gekennzeichnet, dass** die Walzenvorrichtung ferner eine Heizvorrichtung (520) und eine Wärmeableitungsvorrichtung (530) beinhaltet, wobei die Walze (510) in einer Metallhalterung montiert ist und die Heizvorrichtung (520) und die Wärmeableitungsvorrichtung (530) an einer Montagehalterung der Walze (510) montiert sind und wobei die Heizvorrichtung (520) konfiguriert ist, um eine Temperatursteuerung an der Metallhalterung durchzuführen, und wobei die Wärmeableitungsvorrichtung (530) konfiguriert ist, um zu verhindern, dass eine Temperatur der Metallhalterung und der Walze (510) übermäßig hoch ist, um die aktuelle Schicht (112) zu beeinflussen.

2. 3D-Drucksystem gemäß Anspruch 1, das ferner Folgendes beinhaltet:
eine Kühlvorrichtung (220), die konfiguriert ist, um die aktuelle Schicht (112) zu kühlen, nachdem das Drucken der aktuellen Schicht (112) abgeschlossen ist.

3. 3D-Drucksystem gemäß Anspruch 1, wobei die Abflachungsvorrichtung eine Kühlvorrichtung (220) beinhaltet und die Kühlvorrichtung (220) konfiguriert ist, um die aktuelle Schicht (112) zu kühlen, nachdem das Drucken der aktuellen Schicht (112) abgeschlossen ist.

4. 3D-Drucksystem gemäß Anspruch 1, wobei die Walzenvorrichtung (420, 500) ferner Folgendes beinhaltet:
eine Materialabstreifplatte (540), wobei ein Abstreifende der Materialabstreifplatte (540) mit einer Walzenoberfläche der Walzenvorrichtung (420, 500) in Kontakt steht, um ein Material auf der Walzenoberfläche abzustreifen.

5. 3D-Drucksystem gemäß Anspruch 4, wobei die Walzenvorrichtung (420, 500) ferner Folgendes beinhaltet:
eine Bürste (550), wobei ein Bürstenende der Bürste (550) mit der Walzenoberfläche der Walzenvorrichtung (420, 500) in Kontakt steht, um ein Trennmittel auf die Walzenoberfläche aufzubringen.

6. 3D-Drucksystem gemäß Anspruch 1, wobei eine Oberfläche der Walze (510) gerändelt ist.

7. Ein Steuerverfahren für das 3D-Drucksystem gemäß Anspruch 1, das Folgendes beinhaltet:
Vorwärmen (S610) einer vorherigen Schicht einer aktuellen Schicht (112); und
nachdem die vorherige Schicht vorgewärmt wurde, Steuern (S620) einer Materialextrusionsvorrichtung, um ein geschmolzenes Material zu extrudieren, um die aktuelle Schicht (112) zu drucken,
wobei, nachdem das Drucken der aktuellen Schicht (112) abgeschlossen ist, die aktuelle Schicht (112) abgeflacht wird, sodass die aktuelle Schicht (112) flach bleibt.

8. Steuerverfahren gemäß Anspruch 7, das ferner Folgendes beinhaltet:
Kühlen der aktuellen Schicht (112), nachdem das Drucken der aktuellen Schicht (112) abgeschlossen ist.

## Revendications

1. Un système d'impression 3D, comprenant :
un appareil d'extrusion de matériau (120), configuré pour extruder un matériau fondu afin d'imprimer une couche courante (112) ;
un appareil de préchauffage (210), configuré pour préchauffer une couche précédente (111) de la couche courante (112) avant que la couche courante (112) ne soit imprimée ; et
un appareil d'aplatissement, configuré pour : après que l'impression de la couche courante (112) est terminée, aplatir la couche courante (112), de sorte que la couche courante (112) reste plate ;
l'appareil d'aplatissement comprend un appareil à rouleau (420, 500), l'appareil à rouleau (420, 500) comprend un rouleau (510) ; **caractérisé en ce que** l'appareil à rouleau comprend en outre un appareil de chauffage (520) et un appareil de dissipation de chaleur (530), le rouleau (510) étant monté dans un support en métal, et l'appareil de chauffage (520) et l'appareil de dissipation de chaleur (530) étant montés sur un support de montage du rouleau (510), et l'appareil de chauffage (520) étant configuré pour réaliser une commande de température sur le support en métal, et l'appareil de dissipation de chaleur (530) étant configuré pour empêcher qu'une température du support en métal et du rouleau (510) soit excessivement élevée et affecte la couche courante (112).

2. Le système d'impression 3D selon la revendication 1, comprenant en outre :
un appareil de refroidissement (220), configuré pour refroidir la couche courante (112) après que l'impression de la couche courante (112) est terminée.

3. Le système d'impression 3D selon la revendication 1, où l'appareil d'aplatissement comprend un appareil de refroidissement (220), et l'appareil de refroidissement (220) est configuré pour refroidir la couche courante (112) après que l'impression de la couche courante (112) est terminée.

4. Le système d'impression 3D selon la revendication 1, où l'appareil à rouleau (420, 500) comprend en outre :
une plaque de raclage (540) de matériau, où une extrémité de raclage de la plaque de raclage (540) de matériau est en contact avec une surface de rouleau de l'appareil à rouleau (420, 500), de façon à enlever en raclant un matériau de sur la surface de rouleau.

5. Le système d'impression 3D selon la revendication 4, où l'appareil à rouleau (420, 500) comprend en outre :
une brosse (550), où une extrémité de brosse de la brosse (550) est en contact avec la surface de rouleau de l'appareil à rouleau (420, 500), de façon à appliquer un agent de démoulage sur la surface de rouleau.

6. Le système d'impression 3D selon la revendication 1, où une surface du rouleau (510) est moletée.

7. Un procédé de commande pour le système d'impression 3D selon la revendication 1, comprenant :
le préchauffage (S610) d'une couche précédente d'une couche courante (112) ; et
après que la couche précédente est préchauffée, la commande (S620) d'un appareil d'extrusion de matériau pour extruder un matériau fondu afin d'imprimer la couche courante (112),
où après que l'impression de la couche courante (112) est terminée, la couche courante (112) est aplatie, de sorte que la couche courante (112) reste plate.

8. Le procédé de commande selon la revendication 7, comprenant en outre :
le refroidissement de la couche courante (112) après que l'impression de la couche courante (112) est terminée.
